(19) Europäisches Patentamt
European Patent Office
Office européen des brevets

(11) Publication number: **0 010 368**
**B1**

# (12) EUROPEAN PATENT SPECIFICATION

(45) Date of publication of patent specification: **17.03.82**

(51) Int. Cl.$^3$: **C 07 F 9/42**

(21) Application number: **79302006.6**

(22) Date of filing: **26.09.79**

## (54) Process for production of benzene phosphonic dihalide.

(30) Priority: **29.09.78 US 946984**

(43) Date of publication of application:
**30.04.80 Bulletin 80/9**

(45) Publication of the grant of the patent:
**17.03.82 Bulletin 82/11**

(84) Designated Contracting States:
**BE CH DE FR GB IT NL**

(56) References cited:

FR - A - 2 202 097
SU - A - 143 799
US - A - 3 829 480

Chemical Abstracts vol. 59, no. 6, 16 September 1963, Columbus, Ohio, USA.
M. SCHMIDT et al. "Acids of Sulfur. XXVIII. Phosphinosulfonic acids" column 6436a Sitzber. Ges. Befoerder. Ges. Naturw. Marburg, vol. 83/84, 1961/1962, pages 523 to 533

(73) Proprietor: **STAUFFER CHEMICAL COMPANY**
**Westport Connecticut 06880 (US)**

(72) Inventor: **Shim, Kyung Sup**
**6 Genevieve Drive**
**Irvington, New York 10533 (US)**

(74) Representative: **Smith, Sydney et al,**
**Elkington and Fife High Holborn House 52/54**
**High Holborn**
**London WC1V 6SH (GB)**

(56) *References cited:*

Chemical Abstracts vol. 63, no. 9, 25 October 1965, Columbus, Ohio, USA.
E. H. AMONOO-NEIZER et al. "Sulfoxides. I. The oxidation of tervalent phosphorus compounds by dimethyl sulfoxide" column 11407e & J. *Chem. Soc., August 1962, pages 4296 to 4300 (Eng)*

Methoden der organischen Chemie (Houben-Weyl), Volume XII/I, page 398

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 010 368 B1

Process for production of benzene phosphonic dihalide

The present invention relates to a process for the production of benzene phosphonic dihalides, by the oxidation of a phenyl phosphonous dihalides.

Phenyl phosphonous dihalides are commercially available. Various methods of oxidizing alkyl and aryl phosphonous dihalides have been described in the prior art.

In Methoden der organischen Chemie (Houben-Weyl) Volume XII/I, Page 398, reference is made to the fact that most dihalogen phosphines are gradually converted to phosphonic acid dihalides on exposure to air at room temperature, an example being the conversion of phenyl phosphonous dihalide to benzene phosphonic dichloride.

In addition FR—A—2202097 describes a process for the preparation of aryl phosphonic dichlorides of the formula $ArPOCl_2$ which comprises oxidising an aryl dichlorophosphine of the formula $ArPCl_2$ with nitrogen peroxide.

In SU—A—143799 there is also disclosure of oxidation of phenyl phosphonous dichloride to benzene phosphonic dichloride wherein $SO_2Cl_2$ is used as oxidising agent.

Furthermore in Chemical Abstracts Vol. 63, No. 9, 11407e there is disclosure of the oxidation of tervalent phosphorus compounds to phosphoryl compounds, wherein dimethylsulfoxide is used as oxidising agent.

Also in Chemical Abstracts Vol. 59, No. 6, 6436a there is disclosed the oxidation of solutions of $PhPCl_2$ and $Ph_2PCl$ in "Freon" (registered Trade Mark) with $SO_3$ to give $PhPOCl_2$ and $Ph_2POCl$ respectively.

Two methods of oxidizing alkyl phosphonous dihalides are disclosed in U.S. Patent No. 3,829,480. In that patent a recycle method for oxidizing alkyldihalogenationphosphines (alkyl phosphonous dihalides) to the oxides is achieved by the reaction,

$$2RPX_2 + R\overset{\overset{O}{\|}}{P}(OH)_2 + 2X_2 \rightarrow 3R\overset{\overset{O}{\|}}{P}X_2 + 2HX$$

wherein the oxygen donor is prepared by the reaction,

$$R\overset{\overset{O}{\|}}{P}X_2 + 2H_2O \rightarrow R\overset{\overset{O}{\|}}{P}(OH)_2 + 2HX$$

wherein R is an alkyl group and X is any halide. This method however yields by-products in contrast to the process of the present invention.

This United States patent also discloses prior art techniques wherein direct oxidation is utilized. For this direct oxidation pure starting materials are essential. In a modified direct oxidation process high pressure is utilized but pure starting materials are still essential.

A method of preparing cycloalkane phosphonyl dichlorides is also described in U.S. Patent No. 2,772,308. The method is conducted according to the following reaction scheme:

$$RH + 2PCl_3 + O_2 \rightarrow R—\underset{\underset{Cl}{|}}{\overset{\overset{Cl}{|}}{P}} = O + HCl + POCl_3$$

wherein R is a cycloalkane.

Thus it will be seen that there have been many proposals for the oxidation of alkyl and aryl phosphonous dihalides.

We have found that if in the direct oxidation of aryl phosphonous dihalides the presence of charcoal in the reaction mixture unexpectedly leads to improved rates of reaction but also makes possible the use of impure products as starting material which is contrary to what would be expected from the teaching of U.S. Patent 3,829,480.

According to the invention there is provided a process of making a benzene phosphonic dihalide of the formula

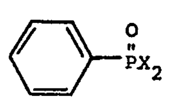

wherein X represents chlorine or bromine by reacting a phenyl phosphonous dihalide of the formula

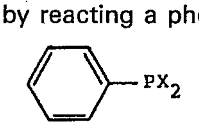

wherein X has the above-stated meaning with oxygen at atmospheric pressure and at a temperature within the range of 0° to 200°C characterised in that the oxygenation takes place in the presence of added charcoal in an amount of from 0.1 to 10% by weight of the phenyl phosphonous dihalide with constant agitation of the reaction mixture.

The benzene phosphonic dihalides prepared according to the process of the invention have the formula

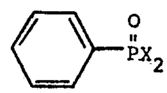

in which X is Cl or Br. They are commercially available. According to the invention the benzene phosphonic dihalides are therefore prepared according to the following reaction:

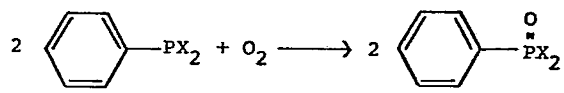

which is conducted at a temperature from 0°C to 200°C in the presence of charcoal.

The benzene phosphonic dihalide is obtained in high purity and is stable at high temperatures. It can be used as an intermediate to prepare flame retardants, insecticides, pesticides and plasticizers.

The reaction can be conducted in any suitable reaction vessel or system capable of holding the starting material. Oxygen can be introduced by bubbling it through the reaction medium or by other suitable means. Constant agitation is necessary to complete the reaction efficiently. The reaction can be conducted batchwise or continuously. When the reaction is completed, any charcoal can be removed by filtration. The product is a clear liquid. In carrying out the invention excess oxygen is utilized to obtain the benzene phosphonic dihalide product.

Reaction times can vary over relatively wide ranges and can easily be determined by one skilled in the art. The primary factor affecting reaction time is the rate of oxygen addition, faster rates of oxygen addition reducing the reaction time. Typical reaction times in a batch system are from 3 to 10 hours.

The identification of products is achieved by conventional methods, such as elemental analysis, gas chromatography for purity and mass spectrometer and nuclear magnetic resonance and infra red analysis to establish structure by comparison with authentic samples.

The following Examples illustrate the invention.

## Example I

A 300 millilitre, 3 necked flask was fitted with a thermometer, magnetic stirrer, condenser and a glass dispersing tube. Crude phenyl phosphonous dichloride (338 grams) having 5% impurities was added to the flask. The flask was then placed in a room temperature water bath. Stirring was begun followed by bubbling oxygen through the solution with the dispersing tube at 15 litres per hour.

The reaction was conducted over a period of six hours. Starting temperature was 28°C. and a maximum temperature of 52°C was reached during the reaction. Continuous stirring was maintained for the duration of the reaction. After three and one half hours the water bath was removed. Three samples were taken over the course of the reaction and were analysed by gas liquid chromatography. The results are summarised below.

| Sample | Reaction Time | Temperature | % Product |
|---|---|---|---|
| 1 | 2 hours | 60°C | 33.0 |
| 2 | 3.75 | 60 | 47.0 |
| 3 | 6 | 42 | 61.4 |

## Example II

The same equipment was used and procedures were followed as in Example I. A 311.4 gram portion of the same crude phenyl phosphonous dichloride was used. Charcoal (1 gram) was also added to the reaction mixture. Oxygen was added at 13 litres per hour. The results are summarized below.

| Sample | Reaction Time | Temperature | % Product |
|---|---|---|---|
| 1 | 2 hours | 60°C | 41.4 |
| 2 | 4 | 50 | 79.5 |
| 3 | 6 | 30 | 91 |

The product was then filtered to remove charcoal. This Example shows that better results are obtained when using charcoal when the starting material contains impurities.

**Claims**

1. A process for making a benzene phosphonic dihalide of the formula

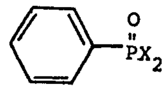

wherein X represents chlorine or bromine by reacting a phenyl phosphonous dihalide of the formula

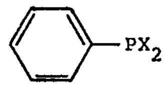

wherein X has the above-stated meaning with oxygen at atmospheric pressure and at a temperature within the range of 0° to 200°C characterised in that the oxygenation takes place in the presence of added charcoal in an amount of from 0.1 to 10% by weight of the phenyl phosphonous dihalide with constant agitation of the reaction mixture.

2. A process as claimed in claim 1 in which the phenyl phosphonous dihalide starting material is impure.

**Patentansprüche**

1. Verfahren zur Herstellung von Phenylphosphorsäuredihalogenid der Formel

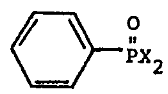

in der X Chlor oder Brom ist, durch Umsetzen eines Phenylphosphordihalogenids der Formel

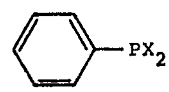

in der X die obengenannte Bedeutung hat, mit Sauerstoff bei atmosphärischem Druck und bei einer Temperatur im Bereich von 0°C bis 200°C, dadurch gekennzeichnet, daß die Oxidation unter ständigem Rühren des Reaktionsgemisches in Gegenwart von Aktivkohle stattfindet, die in einer Menge von 0,1 bis 10 Gew.-% bezogen auf das Gewicht des Phenylphosphordihalogenids, zugesetzt ist.

2. Verfahren nach Anspruch 1, dadurch gekennzeichnet, daß das als Ausgangsmaterial eingesetzte Phenylphosphordihalogenid ungereinigt ist.

**Revendications**

1. Un procédé de préparation de dihalogènure benzyl phosphonique de formule:

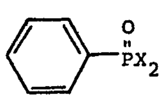

dans laquelle X est Cl ou Br, par réaction d'un dihalogènure phényl phosphoneux de formule:

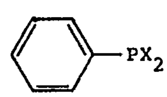

dans laquelle X a la signification précitée, avec de l'oxygène à pression atmosphérique et à une température comprise entre 0° et 200°C caractérisé en ce que l'oxygénation est effectuée en présence de charbon additionné en une quantité comprise entre 0,1 et 10% en poids de dihalogènure phényl phosphoneux, sous agitation constante du milieu réactionnel.

2. Un procédé selon la revendication 1, caractérisé en ce que l'halogènure phényl phosphoneux employé en tant que matière de départ est impur.